(19) **Europäisches Patentamt / European Patent Office / Office européen des brevets**

(11) **EP 2 612 733 B1**

(12) **FASCICULE DE BREVET EUROPEEN**

(45) Date de publication et mention de la délivrance du brevet:
**04.12.2019 Bulletin 2019/49**

(51) Int Cl.:
***B25F 5/00*** (2006.01)

(21) Numéro de dépôt: **12199373.7**

(22) Date de dépôt: **26.12.2012**

(54) **Outil à main rotatif à module de contrôle anti-rotation**

Drehendes Handwerkzeug mit Anti-Rotations-Kontrollmodul

Rotary hand tool with anti-rotation control module

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.01.2012 FR 1250117**

(43) Date de publication de la demande:
**10.07.2013 Bulletin 2013/28**

(73) Titulaire: **Illinois Tool Works Inc.**
**Glenview, IL 60025 (US)**

(72) Inventeur: **Gleizolles, Michel**
**26320 Saint Marcel les Valence (FR)**

(74) Mandataire: **HGF Limited**
**3rd Floor Central Square South**
**Orchard Street**
**Newcastle**
**Newcastle upon Tyne NE1 3AZ (GB)**

(56) Documents cités:
**EP-A2- 1 881 382      US-A- 5 954 457**
**US-A1- 2006 087 286    US-A1- 2007 084 613**

EP 2 612 733 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne les outils à main pourvus d'un moteur électrique d'entraînement en rotation d'un organe d'ancrage, de perçage, de fixation. Il est ici essentiellement fait référence à des perceuses, visseuses, meules et autres marteaux rotatifs.

Avec de tels outils, peut surgir le risque que l'organe devant être entraîné en rotation se bloque soudainement, par exemple, quand un foret de perceuse heurte une partie métallique. Alors, c'est l'outil qui entre en rotation et qui peut blesser l'opérateur à la main, au bras.

On connaît par le document US 2004/0104034, un outil à main comportant, entre le moteur et l'organe à entraîner, un embrayage de sécurité commandé par un module de sécurité à contrôle actif de couple comprenant un détecteur sensible à un déplacement angulaire, et qui coupe l'entraînement du moteur quand l'organe à entraîner ne bouge plus.

Le document EP-A2-1 881 382 décrit les caractéristiques du préambule de la revendication 1.

Un tel outil de l'art antérieur présente toutefois l'inconvénient d'avoir une durée de vie assez réduite.

L'invention vise donc à proposer un outil à main amélioré.

A cet effet, elle concerne un outil à main selon la revendication 1.

Ainsi, au lieu de couper l'entraînement du moteur, on ne fait que freiner le moteur dès que l'outil entre en rotation, ce qui améliore considérablement la durée de vie de l'outil. De plus, le moteur devient un générateur de courant. Le courant généré est réinjecté en polarité inverse dans le moteur, ce qui assure ainsi un freinage rapide de la rotation de l'outil.

Avantageusement, les moyens de détection de l'entraînement en rotation de l'outil comportent un détecteur gyroscopique.

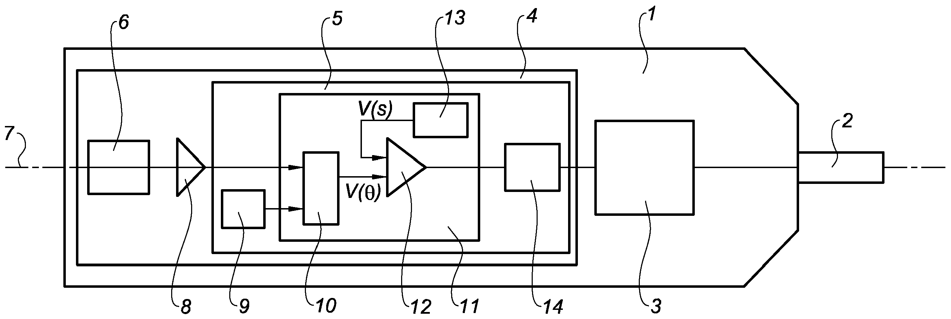

L'invention sera mieux comprise à l'aide de la description suivante d'un outil à main de l'invention en référence à la figure unique qui le représente selon un schéma bloc fonctionnel, avec son moteur électrique d'entraînement d'un organe à entraîner et son module de contrôle pour freiner le moteur en cas de blocage en rotation de l'organe à entraîner.

En référence à la figure, un outil à main 1, ici, mais vraiment à titre seulement d'exemple, un marteau rotatif destiné à entraîner en rotation un foret de perçage 2, comporte un moteur électrique 3, pour l'entraînement du foret 2, et un module de contrôle 4, destiné à empêcher que l'outil n'entre en rotation quand le foret 2 se bloque soudainement, du fait, par exemple, qu'il rencontre, au cours du forage, une partie métallique.

Le module de contrôle 4 comporte un bloc 5 de freinage du moteur 3 et des moyens de détection de l'entraînement en rotation de l'outil 1 commandant le bloc de freinage 5. Les moyens de détection comportent ici un senseur gyroscopique 6 installé sensiblement le long de l'axe de rotation 7 de l'outil. Un filtre électronique 8 est connecté à la sortie du gyroscope 6 pour éliminer le bruit provoqué par le fonctionnement normal de l'outil. Le bloc de freinage 5 est raccordé à la sortie du filtre 8.

Dès que l'outil est mis en marche, le gyroscope 6 peut détecter la rotation de l'outil.

Le signal de sortie du filtre 8 ainsi que celui d'un quartz 9 sont reçus sur un calculateur 10 d'un microcontrôleur 11 qui fournit, en sortie, un signal V (θ) représentatif de la vitesse de rotation de l'outil. Le signal V (θ) est comparé, dans un comparateur 12, à un signal représentatif d'une vitesse de seuil V (s). Cette vitesse V (s) peut être déterminée par un logiciel 13 implanté dans le microcontrôleur 11. Le signal de sortie du comparateur 12 est envoyé sur un contacteur 14 qui est activé dès que

$$V\ (\theta) > V\ (s)$$

Le contacteur 14 est raccordé au moteur 3. L'activation du contacteur 14 isole le moteur de son alimentation électrique. Ainsi le moteur devient un générateur de courant. Le courant généré est réinjecté en polarité inverse dans le moteur, ce qui provoque un freinage rapide, voire brutal, de l'outil.

Cette action d'isolation et d'inversion de phase du moteur peut s'effectuer sur un transistor FET à effet de champ du moteur.

On notera que l'activation du transistor FET doit être la plus rapide possible. C'est pourquoi, on préférera, comme contacteur, un contacteur électromécanique dont la réaction est très rapide. De surcroît, c'est un équipement particulièrement robuste. Ainsi, on peut espérer que l'outil ne soit entraîné en rotation que sur moins d'un quart de tour.

L'ensemble qui vient d'être décrit est donc un module de freinage. Il peut être installé sur tout outil à moteur électrique sur lequel peut surgir un blocage en rotation inopiné. On limite ainsi les risques d'accident de type fracture ou entorse au niveau des bras des opérateurs.

**Revendications**

1. Outil à main (1) à moteur électrique (3) d'entraînement en rotation d'un organe (2) à entraîner, comportant des moyens (5) de freinage du moteur (3) et des moyens (6) de détection de l'entraînement en rotation de l'outil (1) pour commander les moyens de freinage (5) du moteur, **caractérisé en ce que** les moyens de freinage (5) comportent un contacteur électromécanique (14) agencé pour isoler le moteur de son alimentation électrique et le transformer en générateur de courant dont le courant est réinjecté en polarité inverse dans le moteur, et **en ce qu'**il comprend en outre un transistor FET à effet de champ qui est activé par le contacteur électromécanique pour l'isolation et l'inversion de phase du moteur.

2. Outil à main selon la revendication 1, dans lequel
les moyens de détection de l'entraînement en rotation de l'outil comportent un détecteur gyroscopique
(6).

**Patentansprüche**

1. Handwerkzeug (1) mit Elektromotor (3) für den Drehantrieb eines anzutreibenden Elements (2), das Mittel (5) zum Bremsen des Motors (3) und Mittel (6)
zum Erkennen des Drehantriebs des Werkzeugs (1)
aufweist, um die Mittel zum Bremsen (5) des Motors
zu steuern, **dadurch gekennzeichnet, dass** die Mittel zum Bremsen (5) ein elektromechanisches
Schaltschütz (14) aufweisen, das ausgebildet ist, um
den Motor von seiner Stromversorgung zu trennen
und ihn in einen Stromgenerator umzuwandeln, dessen Strom mit umgekehrter Polarität in den Motor
eingespeist wird, und dass es darüber hinaus einen
Feldeffekttransistor FET aufweist, der von dem elektromechanischen Schaltschütz zum Trennen und
zum Invertieren der Phase des Motors aktiviert wird.

2. Handwerkzeug nach Anspruch 1, bei dem die Mittel
zum Erkennen des Drehantriebs des Werkzeugs einen Kreiseldetektor (6) aufweisen.

**Claims**

1. Hand tool (1) with an electric drive motor (3) for rotating a member (2) to be rotated, including means
(5) for braking the motor (3) and means (6) for detecting the rotation of the tool (1) for the purpose of
controlling the means (5) for braking the motor, **characterized in that** the braking means (5) include an
electromechanical contactor (14) that is arranged to
isolate the motor from its electrical power source and
to transform it into a current generator, the current
from which is reinjected, with reverse polarity, into
the motor, and **in that** it further comprises a field-
effect transistor FET that is activated by the electromechanical contactor for isolating and phase-reversing the motor.

2. Hand tool according to Claim 1, wherein the means
for detecting the rotation of the tool include a gyro-
scopic sensor (6).

**EP 2 612 733 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20040104034 A
- EP 1881382 A2